# NOUVEAU FASCICULE DE BREVET EUROPEEN

(11) **EP 0 817 204 B2**
(45) Date de publication et mention de la décision concernant l'opposition: **06.09.2006**
(45) Mention de la délivrance du brevet: 01.03.2000
(21) Numéro de dépôt: 97401474.8
(22) Date de dépôt: 25.06.1997
(51) Int. Cl.: G21C 7/20, G21C 3/33

(54) **Tube de guidage pour assemblage combustible nucléaire**
Führungsrohr für Kernbrennstabbündel
Guide tube for nuclear fuel assembly

(30) Priorité: 28.06.1996 FR 9608092
(43) Date de publication de la demande: 07.01.1998
(73) Titulaire: Framatome ANP, 92400 Courbevoie (FR)
(72) Inventeur: Brosset, Alain, 69270 Fontaines-Saint-Martin (FR); Verdier, Michel, 69100 Villeurbanne (FR)
(74) Mandataire: Jacobson, Claude

(56) Documents cités:
- EP-A- 0 661 719
- FR-A- 2 171 279
- FR-A- 2 539 548
- US-A- 1 339 739
- US-A- 3 725 635
- US-A- 4 642 217
- US-A- 4 668 469
- US-A- 4 759 904
- US-A- 5 068 083
- US-A- 5 343 508
- FAKTA RAPPORT, Materialteknik, Nr. 1 juni 1994; Best nr V020019; EB-svets -- en svetsmetod met manga fordelar, by SVERIGES VERSKSTASDINDUSTRIER; p. 8
- FAKTA RAPPORT, Materialteknik, Nr. 1 juni 1994; Best nr V020019; EB-svets -- en svetsmetod met mänga fördelar, by SVERIGES VERSKSTASDINDUSTRIER; p. 8

## Description

La présente invention conceme les tubes de guidage de crayon de commande destinés à être incorporés au squelette d'un assemblage combustible nucléaire.

Les assemblages de combustible couramment utilisés dans les réacteurs à eau sous pression comportent deux embouts reliés par des tubes guides en alliage à base de zirconium auxquels sont généralement fixées des grilles de maintien de crayons de combustible suivant un réseau régulier. Certains au moins des tubes de guidage des assemblages placés dans un réacteur sont prévus pour recevoir les crayons de grappes de contrôle lors de la descente de ces dernières. Classiquement, ces tubes de guidage présentent dans leur partie inférieure une zone étranglée destinée à freiner la chute de la grappe à la fin du déplacement de cette dernière, par laminage du courant de réfrigérant chassé par le crayon, entre ce dernier et la zone étranglée, qui ne laisse subsister qu'un jeu faible entre le crayon et la paroi du tube guide.

Cette partie inférieure est très sollicitée en cas de chute des grappes, du fait de la surpression hydraulique qui apparaît alors. Elle est également sollicitée dans le cas de phénomènes transitoires qui provoquent successivement la levée de l'assemblage, puis sa retombée. Au cours de cette retombée, la force d'inertie de l'assemblage risque de provoquer une déformation globale de l'assemblage et/ou le flambage des parties affaiblies des tubes, avec pour résultat de gêner le libre passage des crayons de grappe de réglage.

On a déjà proposé divers tubes de guidage ayant une partie basse renforcée. Le document US-A-5 068 083 décrit par exemple un tube de guidage de crayon de commande, muni d'un bouchon terminal inférieur pour assemblage combustible de réacteur nucléaire, en plusieurs pièces soudées, en alliage à base de zirconium, délimitant un passage qui est étranglé dans la Partie inférieure du tube. La partie inférieure du tube guide est rétreinte pour constituer l'étranglement et elle est entourée par un manchon soudé. Cette solution présente notamment l'inconvénient d'une fabrication complexe, avec risque d'apparition de contrainte mécanique.

Le document FR-A-2 539 548 décrit un tube de guidage de diamètre et d'épaisseur constants, muni d'un bouchon inférieur percé d'un trou taraudé de réception d'une vis de fixation.

Le document FR-A-2 171 279 décrit un tube de guidage de diamètre et d'épaisseur constants, fixé à un embout inférieur par un manchon percé d'un trou de diamètre inférieur à celui du tube.

Le document EP-A-0 661 719 décrit de son côté un tube massif de diamètre extérieur constant et d'épaisseur accrue à sa partie inférieure. Ce tube a des propriétés mécaniques et hydrauliques extrêmement favorables, mais il nécessite un outillage spécial pour sa fabrication.

La présente invention vise notamment à fournir un tube de guidage pour assemblage combustible répondant mieux que ceux antérieurement connus aux exigences de la pratique, notamment en ce qu'il est de fabrication simple tout en réduisant les risques d'affaiblissement locaux.

Dans ce but l'invention propose notamment un tube de guidage qui comporte un tronçon supérieur s'étendant sur au moins 70 % de sa longueur et un tronçon inférieur d'épaisseur supérieure à celle du tronçon supérieur, emboîté à sa partie haute dans une partie terminale du tronçon supérieur et soudé à celui-ci le long de la tranche terminale du tronçon supérieur, ledit tronçon inférieur étant soudé au bouchon.

Dans un mode avantageux de réalisation, le tube est de diamètre constant sur la totalité de sa partie courante. Ce résultat peut être atteint de plusieurs façons. Une première solution consiste à donner au tronçon inférieur un diamètre extérieur constant et égal au diamètre extérieur du tronçon supérieur, sauf dans ladite partie haute qui présente un diamètre extérieur réduit, égal au diamètre intérieur du tronçon supérieur. Le tronçon inférieur peut être monobloc. Il peut aussi être constitué d'une pièce haute et d'une pièce basse, la pièce haute s'emboîtant dans le tronçon supérieur et s'emboîtant également dans la pièce basse à laquelle elle est soudée le long d'un épaulement de sa surface externe.

Si on accepte une discontinuité dans le diamètre externe du tube guide en partie courante, une autre solution est possible. Elle consiste à constituer un tronçon inférieur monobloc d'épaisseur sensiblement constante, avec une partie basse ayant le même diamètre extérieur que le tronçon supérieur et une partie haute de diamètre sensiblement égal au diamètre inférieur du tronçon supérieur.

Le tube de guidage est habituellement fermé par un bouchon inférieur d'appui sur l'embout inférieur. Ce bouchon sera généralement percé d'un conduit calibré, destiné à livrer passage au réfrigérant. La paroi même du tube guide sera en général également percée d'ouvertures destinées à laisser passer du réfrigérant chassé par la descente d'un crayon, en imposant une perte de charge d'autant plus importante que le crayon est dans une position plus basse.

L'invention sera mieux comprise à la lecture de la description qui suit de modes particuliers de réalisation, donnés à titre d'exemples non limitatifs. La description se réfère aux dessins qui l'accompagnent, dans lesquels :
- la figure 1 montre la constitution générale d'un tube de guidage suivant un premier mode de réalisation et les moyens de raccordement de ce tube aux embouts d'un assemblage ;
- la figure 2, similaire à la figure 1, montre uniquement un tube de guidage suivant un autre mode de réalisation de l'invention ;
   La figure 3 est un schéma à grande échelle montrant la zone III de la figure 2, avant assemblage et soudage des tronçons ;
   La figure 4, similaire à une fraction de la figure 2, montre encore un autre mode de réalisation ; et
- la figure 5 est une vue de détail à grande échelle montrant une variante de la figure 1.

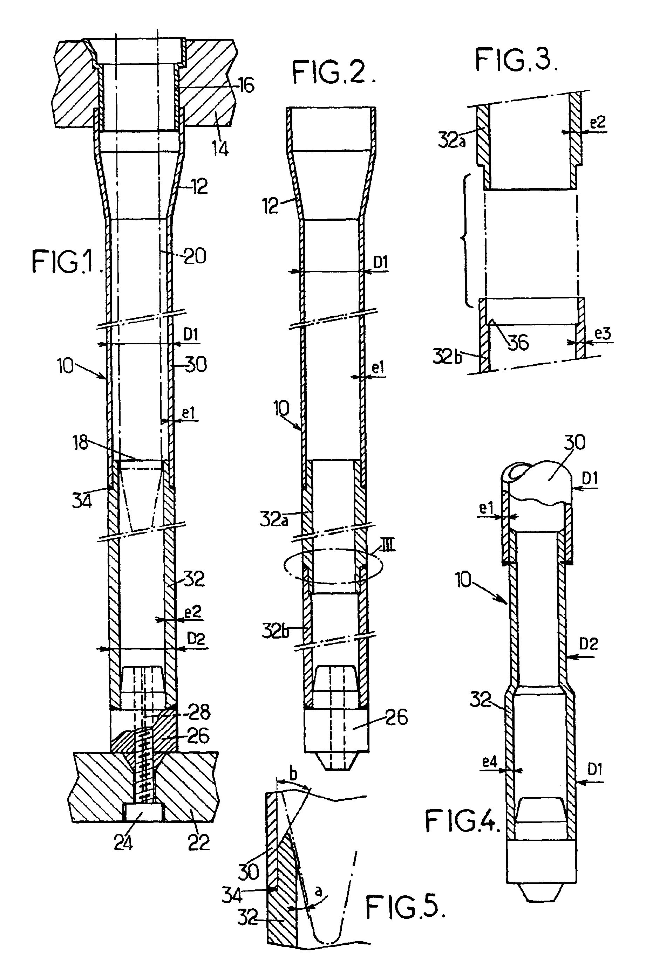

Le tube de guidage 10 montré en figure 1 présente une partie courante de diamètre constant. Cette partie courante se prolonge vers le haut, dans le cas illustré, par une zone renflée terminale 12 de fixation à l'embout supérieur 14. La fixation est effectuée par vissage et immobilisation d'une douille 16. Le réfrigérant chassé par un crayon 20 qui descend le long du tube subi une perte de charge qui augmente notablement lorsque le crayon dépasse la jonction 18 entre un tronçon supérieur et un tronçon inférieur de diamètre intérieur réduit.

Le pied du tube 10 peut être fixé à un embout inférieur 22 par une vis 24 qui s'engage dans un bouchon terminal 26 du crayon, soudé à la partie courante du tube. En général, un passage calibré 28 de sortie de réfrigérant est prévu dans la vis. De plus, des ouvertures non représentées peuvent être réparties le long du tube.

Le tube 10 montré en figure 1 est en deux tronçons soudés l'un à l'autre. Le tronçon supérieur 30 est cylindrique, de diamètre D1, sauf dans la zone terminale renflée 12, et d'épaisseur constante e1. Il s'étend sur une hauteur représentant au moins 70 %, et souvent environ 80 % de la longueur totale du tube 10. Le tronçon inférieur 32 présente le même diamètre extérieur D2, égal à D1, sur toute sa longueur. Son épaisseur e2 est notablement supérieure à el, souvent environ double de el. Ainsi le jeu diamétral entre le crayon 20 et le tube 10 est réduit dès que le crayon pénètre, au cours de sa descente, dans le tronçon 32.

Le tronçon 32 est fixé au tronçon 30 par emboîtement et soudage. Pour cela la partie haute du tronçon inférieur 32 possède un diamètre extérieur réduit de 2e1, sur quelques millimètres de longueur. Le tronçon supérieur 30 prend appui sur l'épaulement ainsi formé et il est soudé en 34 le long de sa tranche terminale. Cette constitution évite toute soudure traversante.

A titre d'exemple représentatif, on peut indiquer qu'un tube de guidage de 3880 mm, dont le tronçon supérieur représentait environ 85 % de la longueur totale a été réalisé en alliage de zirconium, avec D1 =D2=12,45 mm, e1=0,5 mm et e2=1,2 mm. L'épaisseur du téton du tronçon inférieur, égale à e₁-e₂ = 0,7 mm, s'est révélée suffisante pour un emboîtement satisfaisant.

Le mode de réalisation de la figure 2 (où les éléments correspondant à ceux de la figure 1 sont désignés par les mêmes références) se différencie de celui de la figure 1 en ce que le tronçon inférieur est constitué d'une pièce haute 32a et d'une pièce basse 32b. La pièce haute 32a est fixée au tronçon supérieur 12 de la même façon que dans le cas de la figure 1. La pièce basse 32b a une épaisseur e3 comprise entre e1 et e2. Elle est amincie dans une zone terminale de façon à constituer un épaulement interne 36. De son côté la zone terminale inférieur de la pièce haute 32a est amincie de façon à constituer un épaulement externe d'appui de la pièce basse 32b. Le soudage des pièces 32a et 32b s'effectue de la même façon qu'entre les deux tronçons.

La pièce basse 32b sera généralement beaucoup plus courte que la pièce haute 32a. Sa présence permet de réduire les contraintes en cours de la partie finale de la descente du crayon, puisqu'elle laisse subsister un jeu plus important que la pièce haute : à titre d'exemple on peut adopter e3 = 0,9 mm pour e2 = 1,2 mm.

Dans le mode de réalisation montré en figure 4, le tronçon inférieur 32 est monobloc et d'épaisseur constante comme dans le cas de la figure 1. Son épaisseur e4 est supérieure à l'épaisseur e1 du tronçon supérieur 30. Il se compose d'une partie basse ayant le même diamètre extérieur que le tronçon supérieur 30 et d'une partie haute de raccordement ayant un diamètre D2 sensiblement égal au diamètre interne du tronçon supérieur. Cette partie haute peut être constituée par rétreint, en utilisant des procédés de fabrication traditionnels. Cette constitution permet de supprimer une opération d'amincissement local. Elle ne permet cependant pas d'adopter une épaisseur e4 aussi importante que e2 dans le cas de la figure 1, puisque le rétreint réduit le jeu radial de e4. Dans la pratique, pour un tube de guidage où on pourrait adopter e2 = 1,2 mm, on sera conduit à adopter e4 au moins de l'ordre de 0,7 mm pour une épaisseur e1 de 0,5 mm.

Dans la variante de réalisation de la figure 5, où les éléments correspondant à ceux de la figure 1 portent le même numéro de référence, la partie haute du tronçon inférieur 32 présente un chanfrein externe et un chanfrein interne. Le chanfrein externe, de forme sensiblement conique, s'étend sur une fraction de la partie haute. Il facilite l'emboîtement de la partie haute dans le tronçon supérieur avant soudage. Il aura souvent une pente b d'environ 30°. Le chanfrein interne, généralement plus long, a une pente a du même ordre que celle de la partie terminale du crayon qu'il doit recevoir. Dans la pratique, un angle d'environ 15° est optimal. Les deux chanfreins ne se rejoignent pas, de façon à laisser subsister une extrémité plane ou arrondie.

## Revendications

1. Tube de guidage de crayon de commande pour assemblage combustible de réacteur nucléaire, en plusieurs parties soudées, en alliage à base de zirconium, muni d'un bouchon terminal inférieur (26) et délimitant un passage qui est étranglé dans une partie inférieure du tube, **caractérisé en ce que** le tube comporte un tronçon supérieur (12) s'étendant sur au moins 70 % de sa longueur et un tronçon inférieur d'épaisseur (e2 ; e3 ; e4) supérieure à celle (e1) du tronçon supérieur, dont la partie haute est emboîtée dans une fraction terminale du tronçon supérieur (30) et est soudée au tronçon supérieur le long de la tranche terminale de ce tronçon supérieur, le dit tronçon inférieur étant soudé au bouchon.

2. Tube de guidage selon la revendication 1, **caractérisé en ce que** le tronçon inférieur (32) est de diamètre extérieur constant et égal au diamètre extérieur du tronçon supérieur, sauf dans ladite partie haute, amincie, qui présente un diamètre extérieur réduit, égal au diamètre interne du tronçon supérieur (30).

3. Tube de guidage selon la revendication 2, **caractérisé en ce que** le tronçon inférieur est monobloc.

4. Tube de guidage selon la revendication 2, **caractérisé en ce que** le tronçon inférieur est constitué d'une pièce haute (32a) et d'une pièce basse (32b), la pièce haute s'emboîtant dans le tronçon supérieur et s'emboîtant également dans la pièce basse à laquelle elle est soudée le long d'un épaulement de sa surface externe.

5. Tube selon la revendication 4, **caractérisé en ce que** la pièce basse (32b) présente un épaulement interne d'appui de la tranche inférieure d'une fraction terminale de la pièce haute, qui a un diamètre extérieur réduit.

6. Tube de guidage selon la revendication 4 ou 5, **caractérisé en ce que** la pièce basse (32b) a une épaisseur intermédiaire entre celle du tronçon supérieur et celle de la pièce haute (32a).

7. Tube selon la revendication 1, **caractérisé en ce que** le tronçon inférieur (32) est monobloc, d'épaisseur (e4) sensiblement constante et supérieure à l'épaisseur (e1) du tronçon supérieur (12) et se compose d'une partie basse ayant le même diamètre extérieur que le tronçon supérieur et d'une partie haute de diamètre sensiblement égal au diamètre intérieur du tronçon supérieur.

8. Tube selon la revendication 2 ou 3, **caractérisé en ce que** ladite partie haute amincie présente un chanfrein externe et un chanfrein interne.

9. Tube selon la revendication 8, **caractérisé en ce que** le chanfrein externe s'étend sur une fraction seulement de la longueur de ladite partie haute amincie.

10. Tube selon la revendication 9, **caractérisé en ce que** le chanfrein interne est plus long que le chanfrein externe.

## Claims

1. Guide tube for a control rod of a nuclear reactor fuel assembly, comprising a plurality of welded parts made of zirconium-based alloy, provided with a lower end plug (26) and defining a passage which is throttled in a lower portion of the tube, **characterised in that** the tube includes an upper section (12) extending over at least 70% of its length and a lower section having a thickness (e2; e3; e4) greater than that (e1) of the upper section, the top portion of which lower section is fitted into an end portion of the upper section (30) and is welded to the upper section along the end edge of said upper section, said lower section being welded to the plug.

2. Guide tube according to claim 1, **characterised in that** the lower section (32) has an external diameter which is constant and equal to the external diameter of the upper section except in said top portion, which is made thinner and has a reduced external diameter equal to the internal diameter of the upper section (30).

3. Guide tube according to claim 2, **characterised in that** the lower section is formed in one piece.

4. Guide tube according to claim 2, **characterised in that** the lower section is composed of a top part (32a) and a bottom part (32b), the top part fitting into the upper section and also fitting into the bottom part, to which it is welded along a shoulder of its outer surface.

5. Tube according to claim 4, **characterised in that** the bottom part (32b) has an internal shoulder bearing against the lower edge of an end portion of the top part, which has a reduced external diameter.

6. Guide tube according to claim 4 or 5, **characterised in that** the bottom part (32b) has a thickness intermediate between that of the upper section and that of the top part (32a).

7. Tube according to claim 1, **characterised in that** the lower section (32) is formed in one piece, has a thickness (e4) which is substantially constant and greater than the thickness (e1) of the upper section (12), and is composed of a bottom portion having the same external diameter as the upper section and a top portion having a diameter substantially equal to the internal diameter of the upper section.

8. Tube according to claim 2 or 3, **characterised in that** said thinner top portion has an external chamfer and an internal chamfer.

9. Tube according to claim 8, **characterised in that** the external chamfer extends over only a part of the length of said thinner top part.

10. Tube according to claim 9, **characterised in that** the internal chamfer is longer than the external chamfer.

## Patentansprüche

1. Steuerstabführungsrohr für eine Brennelementkassette eines Kernreaktors aus mehreren geschweißten Teilen aus einer Legierung auf Zirkoniumbasis, das mit einem Stopfen (26) am unteren Ende versehen ist und einen Durchgang festlegt, der in einem unteren Abschnitt des Rohrs verengt ist, **dadurch gekennzeichnet, dass** das Rohr ein oberes Teilstück (30) aufweist, das sich über mindestens 70% seiner Länge erstreckt, und ein unteres Teilstück, dessen Dicke (e2; e3; e4) größer ist als die Dicke (e1) des oberen Teilstücks und dessen oberer Abschnitt in einen Endabschnitt des oberen Teilstücks (30) eingefügt und entlang des Endes desselben angeschweißt ist, wobei das untere Teilstück an den Stopfen angeschweißt ist.

2. Führungsrohr nach Anspruch 1, **dadurch gekennzeichnet, dass** der Außendurchmesser des unteren Teilstücks (32) konstant ist und dem Außendurchmesser des oberen Teilstücks entspricht, außer im oberen, dünneren Abschnitt mit verkleinertem Außendurchmesser, welcher dem Innendurchmesser des oberen Teilstücks (30) entspricht.

3. Führungsrohr nach Anspruch 2, **dadurch gekennzeichnet, dass** das untere Teilstück aus einem Stück ist.

4. Führungsrohr nach Anspruch 2, **dadurch gekennzeichnet, dass** das untere Teilstück aus einem oberen Abschnitt (32a) und einem unteren Abschnitt (32b) gebildet ist, wobei sich der obere Abschnitt in das obere Teilstück und auch in den unteren Abschnitt einfügt, an den er entlang eines Absatzes seiner Außenfläche geschweißt ist.

5. Rohr nach Anspruch 4, **dadurch gekennzeichnet, dass** der untere Abschnitt (32b) einen inneren Absatz zum Abstützen des unteren Endes eines Endabschnittes des oberen Abschnitts mit verringertem Außendurchmesser aufweist.

6. Führungsrohr nach Anspruch 4 oder 5, **dadurch gekennzeichnet, dass** die Dicke des unteren Abschnitts (32b) zwischen der des oberen Teilstücks und des oberen Abschnitts (32a) liegt.

7. Führungsrohr nach Anspruch 1, **dadurch gekennzeichnet, dass** das untere Teilstück (32) aus einem Stück ist und eine im wesentlichen konstante Dicke (e4) aufweist, die größer ist als die Dicke (e1) des oberen Teilstücks (12), und sich aus einem unteren Abschnitt vom gleichen Außendurchmesser wie das obere Teilstück und aus einem oberen Abschnitt mit im wesentlichen dem gleichen Durchmesser wie der Innendurchmesser des oberen Teilstücks zusammensetzt.

8. Rohr nach Anspruch 2 oder 3, **dadurch gekennzeichnet, dass** der obere, dünnere Abschnitt eine äußere und eine innere abgeschrägte Kante aufweist.

9. Rohr nach Anspruch 8, **dadurch gekennzeichnet, dass** sich die äußere abgeschrägte Kante nur an einem Teil der Länge des oberen, dünneren Abschnitts erstreckt.

10. Rohr nach Anspruch 9, **dadurch gekennzeichnet, dass** die innere abgeschrägte Kante länger ist als die äußere abgeschrägte Kante.
